# EUROPEAN PATENT APPLICATION

(11) **EP 4 354 190 A1**
(43) Date of publication of application: **17.04.2024**
(21) Application number: 21945158.0
(22) Date of filing: 10.06.2021
(51) Int. Cl.: G02B 6/12

(54) **OPTICAL WAVEGUIDE, QUANTUM COMPUTATION DEVICE, AND METHOD FOR MANUFACTURING OPTICAL WAVEGUIDE**

(71) Applicant: FUJITSU LIMITED, Kawasaki-shi, Kanagawa 211-8588 (JP)
(72) Inventor: ISHIGURO, Tetsuro, Kawasaki-shi, Kanagawa 211-8588 (JP); MIYATAKE, Tetsuya, Kawasaki-shi, Kanagawa 211-8588 (JP); KAWAGUCHI, Kenichi, Kawasaki-shi, Kanagawa 211-8588 (JP); IWAI, Toshiki, Kawasaki-shi, Kanagawa 211-8588 (JP); DOI, Yoshiyasu, Kawasaki-shi, Kanagawa 211-8588 (JP); SATO, Shintaro, Kawasaki-shi, Kanagawa 211-8588 (JP)
(74) Representative: Haseltine Lake Kempner LLP
(86) International application number: PCT/JP2021/022197
(87) International publication number: WO 2022/259484

(57) **Abstract**

An optical waveguide includes a diamond layer including a first surface, a second surface and a diamond layer including a complex defect; a first clad layer in contact with the first surface; a second clad layer in contact with the second surface and including a polarity; and a metal layer in Schottky contact with the second clad layer

## Description

### TECHNICAL FIELD

The present disclosure relates to an optical waveguide, a quantum computing device, and a method for manufacturing an optical waveguide.

### BACKGROUND ART

An optical waveguide for a quantum computing device using a color center as a complex defect in a diamond layer has been studied.

### PRIOR ART DOCUMENT

### Patent Document

[Patent Document 1] U.S. Patent No. 8837544
[Patent Document 2] Japanese National Publication of International Patent Application No. 2007-526639
[Patent Document 3] U.S. Patent Application Publication No. 2007/0277730

### SUMMARY OF INVENTION

### TECHNICAL PROBLEM

The quantum computing device is used at an extremely low temperature of about several K, but in a conventional optical waveguide, a charged state of the complex defect tends to become unstable at the extremely low temperature.

A purpose of the present disclosure is to provide an optical waveguide, a quantum computing device, and a method for manufacturing an optical waveguide that are capable of improving the stability of the charged state of the complex defect.

### SOLUTION T0 PROBLEM

According to an aspect of the present disclosure, there is provided an optical waveguide including: a diamond layer including a first surface, a second surface and a complex defect; a first clad layer in contact with the first surface; a second clad layer in contact with the second surface and having a polarity; and a metal layer in Schottky contact with the second clad layer.

### EFFECT OF INVENTION

According to the present disclosure, it is possible to improve the stability of the charge state of the complex defect.

### BRIEF DESCRIPTION OF DRAWINGS

FIG. 1 is a perspective view illustrating an optical waveguide according to a first embodiment;
FIG. 2 is a cross-sectional view illustrating the optical waveguide according to the first embodiment;
FIG. 3 is a diagram illustrating a band structure in a case where a clad layer is an aluminum nitride (AlN) layer in the optical waveguide according to the first embodiment;
FIG. 4 is a cross-sectional view (part 1) illustrating a method for manufacturing the optical waveguide according to the first embodiment;
FIG. 5 is a cross-sectional view (part 2) illustrating the method for manufacturing the optical waveguide according to the first embodiment;
FIG. 6 is a cross-sectional view (part 3) illustrating the method for manufacturing the optical waveguide according to the first embodiment;
FIG. 7 is a cross-sectional view (part 4) illustrating the method for manufacturing the optical waveguide according to the first embodiment;
FIG. 8 is a cross-sectional view (part 5) illustrating the method for manufacturing the optical waveguide according to the first embodiment ;
FIG. 9 is a cross-sectional view (part 6) illustrating the method for manufacturing the optical waveguide according to the first embodiment;
FIG. 10 is a diagram illustrating a band structure in a case where a clad layer is a gallium nitride (GaN) layer in the optical waveguide according to the first embodiment;
FIG. 11 is a diagram illustrating a band structure in a case where a clad layer is a boron nitride (BN) layer in the optical waveguide according to the first embodiment;
FIG. 12 is a diagram illustrating a relationship between a wavelength of light and a transmittance in Au layers having various thicknesses.
FIG. 13 is a diagram illustrating the relationship between the wavelength of light and the transmittance in various metal layers.
FIG. 14 is a diagram (part 1) illustrating a distribution of an intensity of propagating light in a zero (0) order transverse mode in a cross section perpendicular to a longitudinal direction of a diamond layer;
FIG. 15 is a diagram (part 2) illustrating the distribution of the intensity of propagating light in the 0 order transverse mode in the cross section perpendicular to the longitudinal direction of the diamond layer;
FIG. 16 is a diagram (part 3) illustrating the distribution of the intensity of propagating light in the 0 order transverse mode in the cross section perpendicular to the longitudinal direction of the diamond layer;
FIG. 17 is a diagram (part 1) illustrating a distribution of an intensity of propagating light in a first order mode in a cross section perpendicular to a longitudinal direction of a diamond layer;
FIG. 18 is a diagram (part 2) illustrating the distribution of the intensity of propagating light in the first order mode in the cross section perpendicular to the longitudinal direction of the diamond layer;
FIG. 19 is a diagram (part 3) illustrating the distribution of the intensity of propagating light in the first order mode in the cross section perpendicular to the longitudinal direction of the diamond layer; and
FIG. 20 is a block diagram illustrating a quantum computing device according to the second embodiment.

### DESCRIPTION OF EMBODIMENTS

Hereinafter, embodiments of the present disclosure will be specifically described with reference to the accompanying drawings. Note that, in the present description and the drawings, constituent elements having substantially the same functional configuration are denoted by the same reference numerals to omit description thereof in some cases.

### (First Embodiment)

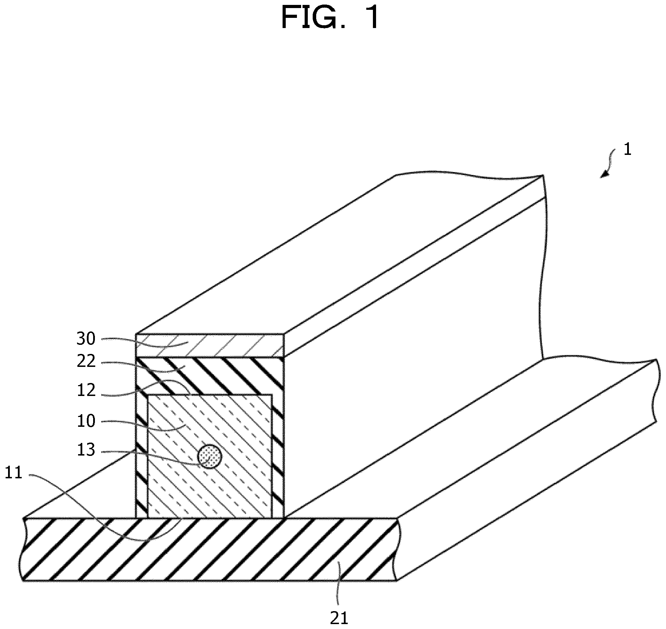

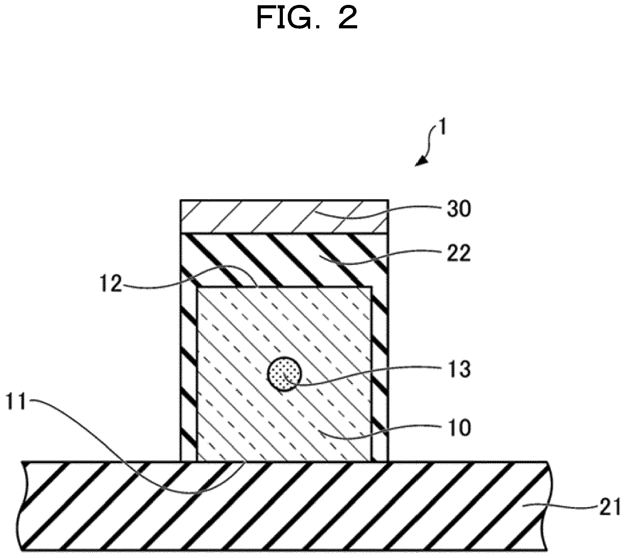

First, a first embodiment will be described. The first embodiment relates to an optical waveguide. The optical waveguide according to the first embodiment is used in, for example, a quantum computing device such as a quantum computer. FIG. 1 is a perspective view illustrating the optical waveguide according to a first embodiment ; FIG. 2 is a cross-sectional view illustrating the optical waveguide according to the first embodiment.

As illustrated in FIGS. 1 and 2, the optical waveguide 1 according to the first embodiment includes a support substrate 21, a diamond layer 10, a clad layer 22, and a metal layer 30.

The support substrate 21 is, for example, a sapphire substrate. The refractive index of the support substrate 21 is lower than that of the diamond layer 10. The refractive index of sapphire is 1.76 and the refractive index of diamond is 2.419. The support substrate 21 may be, for example, an AlN substrate, a BN substrate, a GaN substrate or the like. The refractive index of AlN is 2.1, the refractive index of BN is 2.17, and the refractive index of GaN is 2.38. The support substrate 21 is an example of a first clad layer.

The diamond layer 10 has a first surface 11 and a second surface 12. The support substrate 21 is in contact with the first surface 11. The second surface 12 is a surface opposite to the first surface 11. The diamond layer 10 is, for example, about 250nm thick. The diamond layer 10 comprises a colour center 13. The color center 13 is, for example, a nitrogen-vacancy center (NV center) composed of nitrogen and a vacancy. The color center 13 may be a silicon-vacancy center (SiV center) composed of silicon and a vacancy, a germanium-vacancy center (GeV center) composed of germanium and a vacancy, a tin-vacancy center (SnV center) composed of tin and a vacancy, a lead-vacancy center (PbV center) composed of lead and a vacancy, or a boron-vacancy center (BV center) composed of boron and a vacancy. The color center 13 is an example of a complex defect.

The clad layer 22 is in contact with the second surface 12 of the diamond layer 10. The clad layer 22 may cover the side surface of the diamond layer 10, for example, the surface coupling the first surface 11 and the second surface 12. The clad layer 22 is about 100nm thick, for example. The clad layer 22 has polarity in the thickness direction. For example, the clad layer 22 does not have an inversion symmetry center in the thickness direction. The clad layer 22 has, for example, spontaneous polarization oriented from a side of the metal layer 30 to a side of the diamond layer 10. The clad layer 22 includes, for example, a nitride semiconductor. The band gap of the nitride semiconductors is preferably 3.4eV or more and 6.4eV or less at room temperature (300K). The clad layer 22 is, for example, an AlN layer. The refractive index of the clad layer 22 is lower than that of the diamond layer 10. The clad layer 22 may be, for example, a BN layer, a GaN layer or the like. The material of the clad layer 22 may be a mixed crystal containing two or three of Al, B, and Ga. The clad layer 22 is an example of a second clad layer.

The metal layer 30 is in Schottky contact with the clad layer 22. The metal layer 30 is made of, for example, a metal having a work function larger than the electron affinity of the nitride semiconductor constituting the clad layer 22. The metal layer 30 is, for example, about 5nm thick. The metal layer 30 is, for example, an Au layer. The metal layer 30 may be an Ag layer or a Cu layer. The metal layer 30 may be an Al layer.

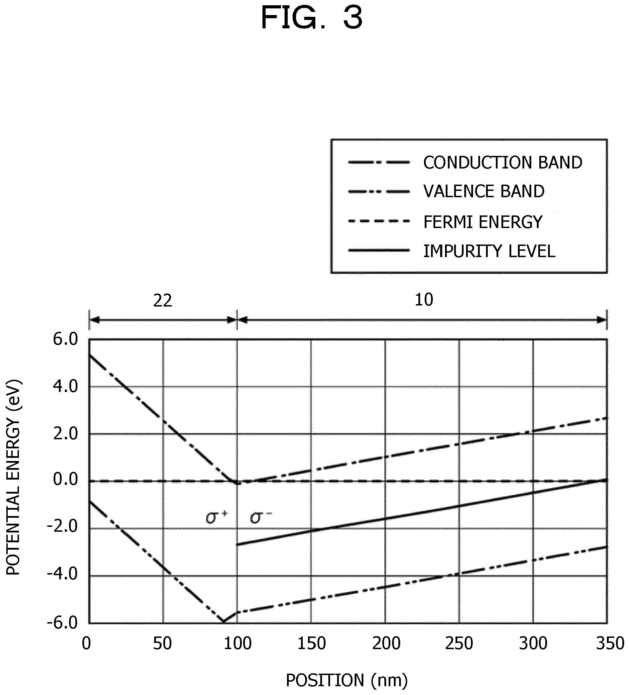

Here, characteristics of the optical waveguide 1 according to the first embodiment will be described. FIG. 3 is a diagram illustrating a band structure in a case where the clad layer 22 is an AlN layer in the optical waveguide 1 according to the first embodiment. FIG. 3 illustrates results of a one dimensional Poisson simulation. In this simulation, the ambient temperature is 5K, the support substrate 21 is a sapphire substrate, the diamond layer 10 is 250nm thick, the clad layer 22 is 100nm thick AlN, and the metal layer 30 is 5nm thick Au layer. Further, the complex defect is an NV center. The horizontal axis in FIG. 3 indicates a position in the depth direction with using the interface between the metal layer 30 and the clad layer 22 as a reference, and the vertical axis indicates a potential energy of electrons formed by the charge distribution.

As illustrated in FIG. 3, due to the Schottky contact between the metal layer 30 and the clad layer 22, almost the entire clad layer 22 is depleted in the thickness direction in a state where there is no bias, for example, in a state where there is 0 bias. This indicates that since the band gap of AlN constituting the clad layer 22 is as large as 6. 4eV and there is no defect level capable of emitting sufficient thermal electrons at 5K which is a preset temperature, almost the entire clad layer 22 is depleted by the Schottky contact in the thickness direction.

Further, the clad layer 22 has a polarity in the thickness direction, and the clad layer 22 has spontaneous polarization oriented from the side of the metal layer 30 to the side of the diamond layer 10, for example. Therefore, the clad layer 22 contains polarization charges (σ⁺) caused by its own spontaneous polarization. For this reason, a considerable amount of negative charge needs to be induced at the interface between the clad layer 22 and the diamond layer 10 in order to satisfy the charge neutrality condition, but the band gap of diamond is as large as 5.4eV, and at 5K, thermal electrons that alone compensate for the polarization charge (σ⁺) of the clad layer 22 are insufficient. Therefore, negative fixed charges (σ⁻) are induced in the vicinity of the second surface 12 of the diamond layer 10. The density of the negative fixed charges is, for example, 10¹²/cm2.

Furthermore, since the band offset at the interface between the clad layer 22 and the diamond layer 10 is small, the Fermi energy of the diamond layer 10 is higher than the activation energy (-2. 58eV) of the color center 13 over substantially the entire depth direction. Therefore, a state in which the color center 13 is easily negatively charged is formed.

According to the first embodiment like this, it is easy to maintain the state in which the color center 13 is negatively charged even at an extremely low temperature of about 5K. For example, according to the first embodiment, the stability of the charged state of the color center 13 can be improved.

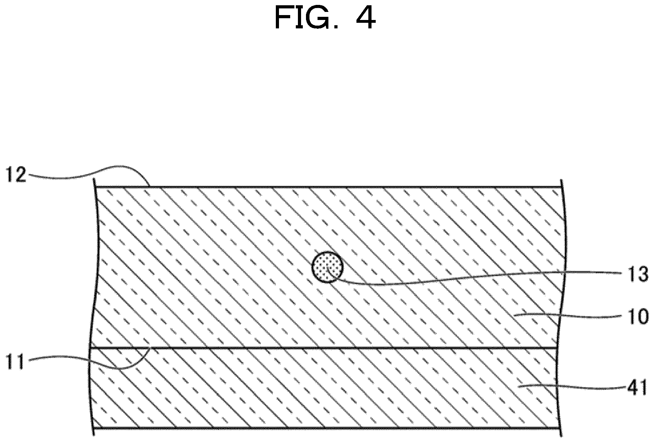

Next, a method of manufacturing the optical waveguide 1 according to the first embodiment will be described. FIGS. 4 to 9 are cross-sectional views illustrating a method for manufacturing the optical waveguide 1 according to the first embodiment.

First, as illustrated in FIG. 4, a diamond substrate 41 is prepared and a diamond layer 10 is formed over the diamond substrate 41. As the diamond substrate 41, for example, a type IIa diamond substrate having a nitrogen content of less than 5ppb is used. The diamond layer 10 may be formed by, for example, a chemical vapor deposition (CVD) method.

A color center 13 is formed at a desired depth by temporarily adding a gas containing impurity atoms to a raw material gas during the formation of a diamond layer 10. When the NV center is formed as the color center 13, for example, a NH3 gas is temporarily added. In this way, color centers 13 may be formed in-situ.

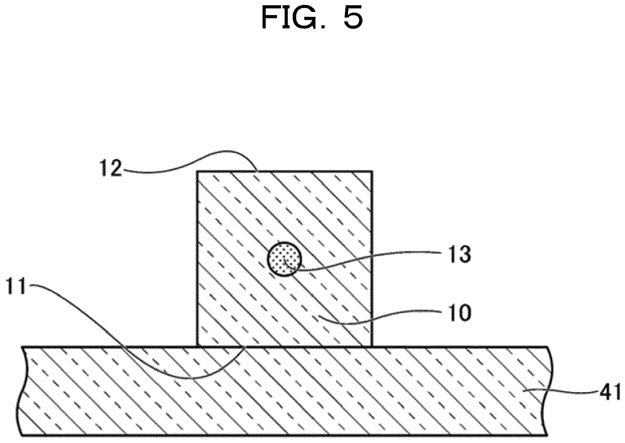

Next, as illustrated in FIG. 5, the diamond layer 10 is processed into a shape of a core layer of an optical waveguide by using, for example, a focused ion beam (FIB).

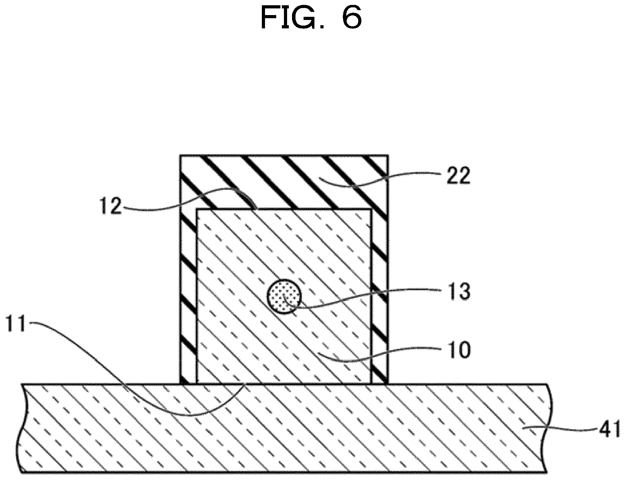

Thereafter, as illustrated in FIG. 6, a clad layer 22 is formed over the diamond layer 10. The clad layer 22 may be formed by, for example, a metal organic chemical vapor deposition (MOCVD) method. The clad layer 22 is formed so as to cover the second surface 12 of the diamond layer 10. The clad layer 22 may cover the side surface of the diamond layer 10. The clad layer 22 may also be formed over the diamond substrate 41.

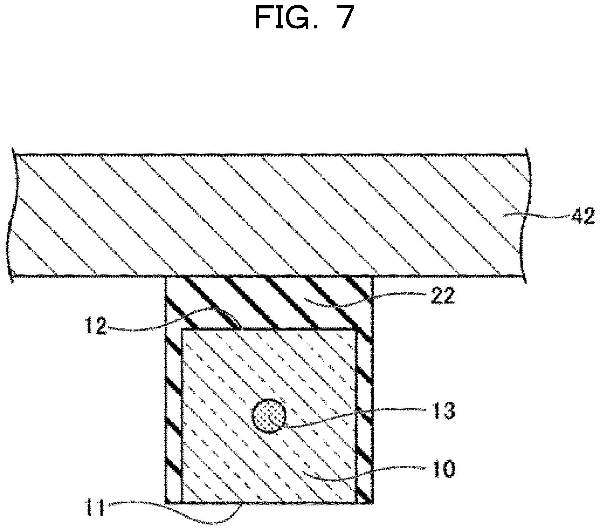

Subsequently, as illustrated in FIG. 7, a transfer substrate 42 is bonded to the upper surface of the clad layer 22. Next, diamond substrate 41 is removed by grinding.

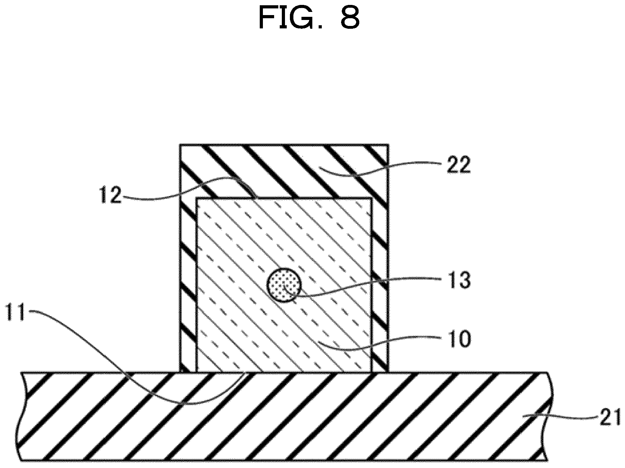

Thereafter, as illustrated in FIG. 8, the diamond layer 10 is bonded to the support substrate 21. The first surface 11 of the diamond layer 10 is in contact with the support substrate 21. Subsequently, the transfer substrate 42 is removed.

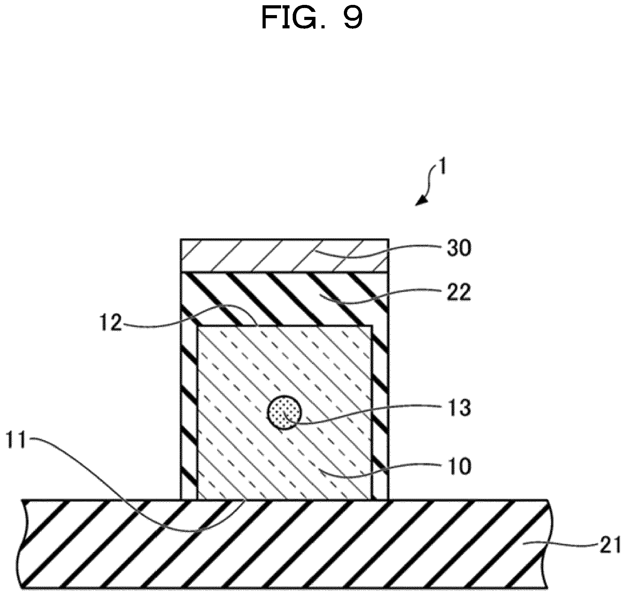

Next, as illustrated in FIG. 9, the metal layer 30 is formed over the clad layer 22. In the formation of the metal layer 30, for example, a resist film having an opening in a region where the metal layer 30 is to be formed is formed by a photolithography technique, an Au layer is formed by a vapor deposition method using the resist film as a growth mask, and the resist film is removed together with the Au layer thereon. For example, the metal layer 30 may be formed by deposition and lift-off.

In this way, the optical waveguide 1 according to the first embodiment may be manufactured.

The diamond layer 10 may be formed by forming the color center 13 in the diamond substrate 41 by ion implantation or the like and processing the diamond substrate 41 into the shape of the core layer of the optical waveguide.

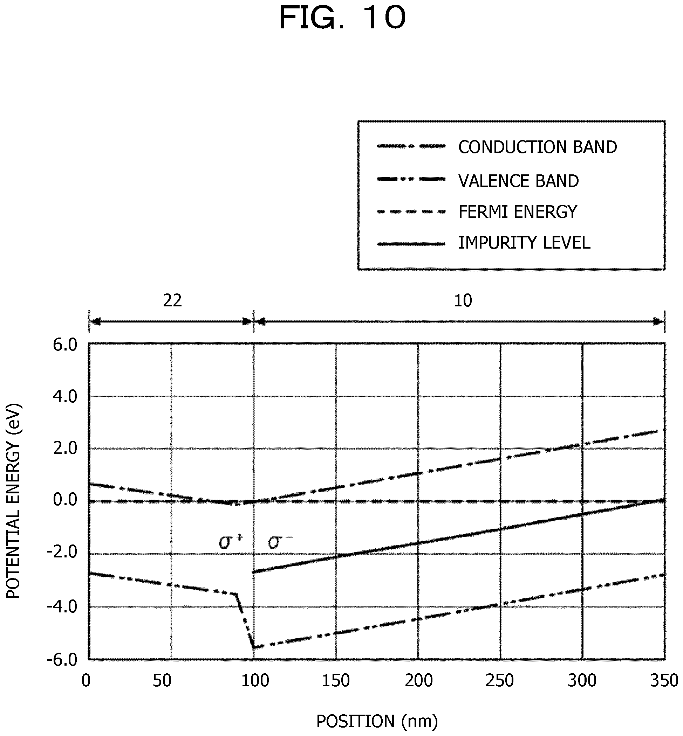

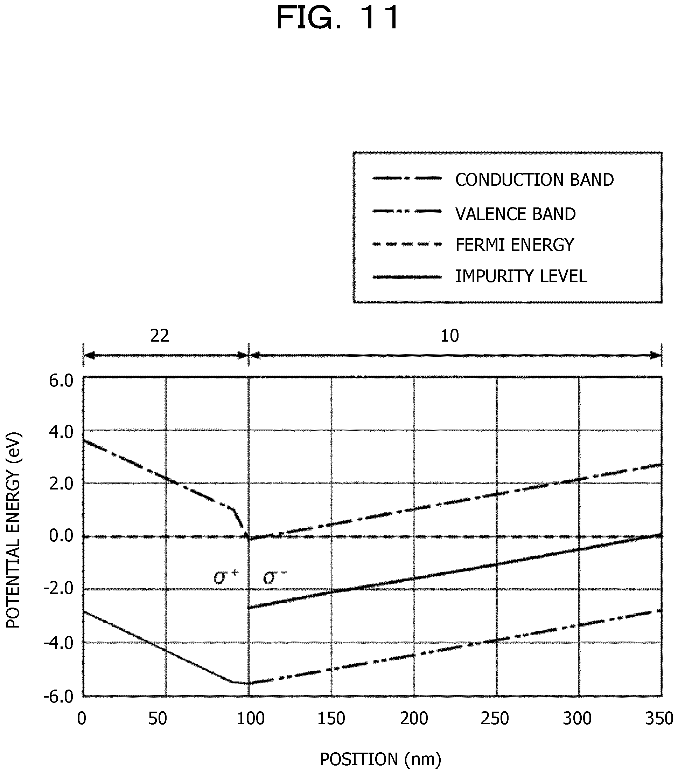

As described above, the clad layer 22 may be a GaN layer or a BN layer. FIG. 10 is a diagram illustrating a band structure in a case where the clad layer 22 is a GaN layer in the optical waveguide 1 according to the first embodiment. FIG. 11 is a diagram illustrating a band structure in a case where the clad layer 22 is a BN layer in the optical waveguide 1 according to the first embodiment.

As illustrated in FIG. 10, also in the case where the clad layer 22 is a GaN layer, almost the entire clad layer 22 is depleted in a state where there is no bias, negative fixed charges are induced in the vicinity of the second surface 12 of the diamond layer 10, and the state in which the color center 13 is easily negatively charged is formed. Similarly, as illustrated in FIG. 11, also when the clad layer 22 is a BN layer, almost the entire clad layer 22 is depleted in the absence of bias, negative fixed charges are induced in the vicinity of the second surface 12 of the diamond layer 10, and the state is formed in which the color center 13 is easily negatively charged.

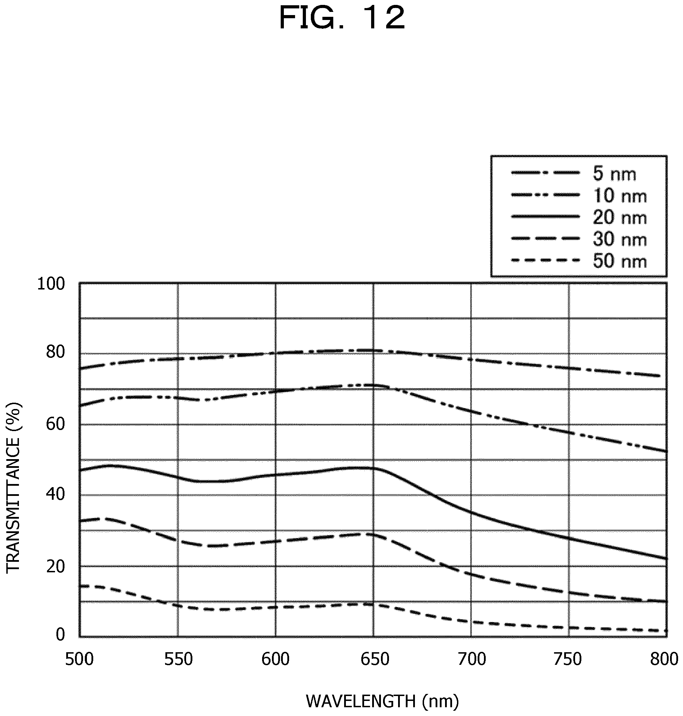

The optical waveguide 1 may be irradiated with light through the support substrate 21, through the metal layer 30 and the clad layer 22, or directly to the diamond layer 10. Here, the relationship between the wavelength of light and the transmittance in the Au layer will be described. FIG. 12 is a diagram illustrating the relationship between the wavelength of light and the transmittance in Au layers having various thicknesses. In FIG. 12, the horizontal axis represents the wavelength of the irradiated light, and the vertical axis represents the transmittance.

When the wavelength of light propagating through the optical waveguide 1 is 520nm to 740nm, as illustrated in FIG. 12, a transmittance of 60% or more may be obtained if the thickness of the Au layer is 10nm or less. Therefore, the thicknesses of the Au layer used for the metal layer 30 is preferably 10nm or less, more preferably 5nm or less. For example, when the Au layer is 5nm thick, a transmittance of about 80% may be obtained for light of 650nm wavelength.

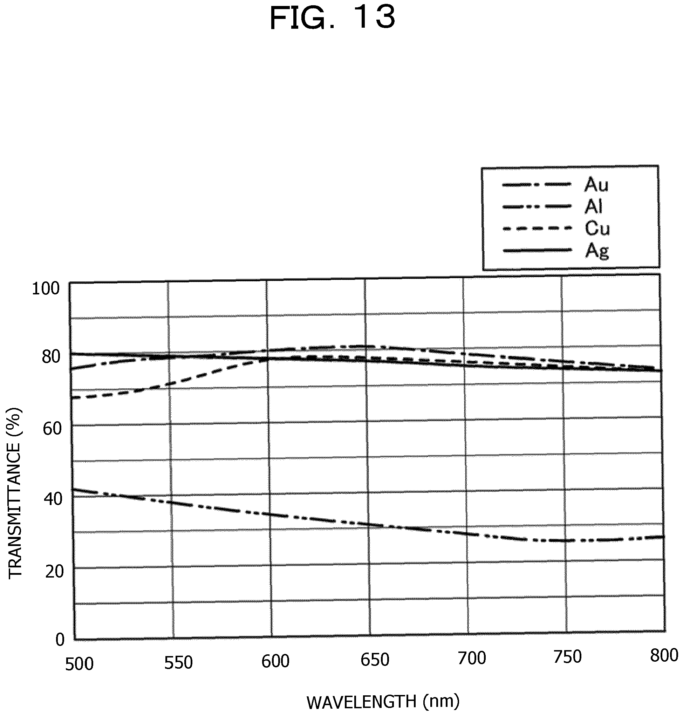

As described above, the metal layer 30 may be an Ag layer, a Cu layer or an Al layer. Here, the relationship between the material of the metal layer 30 and the transmittance will be described. FIG. 13 is a diagram illustrating the relationship between the wavelength of light and the transmittance in various metal layers. In FIG. 13, the horizontal axis represents the wavelength of the irradiated light, and the vertical axis represents the transmittance. Note that the thickness of each of the metal layers is 5nm.

When the wavelength of light propagating through the optical waveguide 1 is 520nm to 740nm, as illustrated in FIG. 13, a transmittance of 70% or more is obtained in the Au layer, the Ag layer, or the Cu layer. On the other hand, the transmittance of the Al layer is 40% or less. Therefore, when the diamond layer 10 is irradiated with light through the metal layer 30 and the clad layer 22, the metal layer 30 is preferably an Au layer, an Ag layer, or a Cu layer.

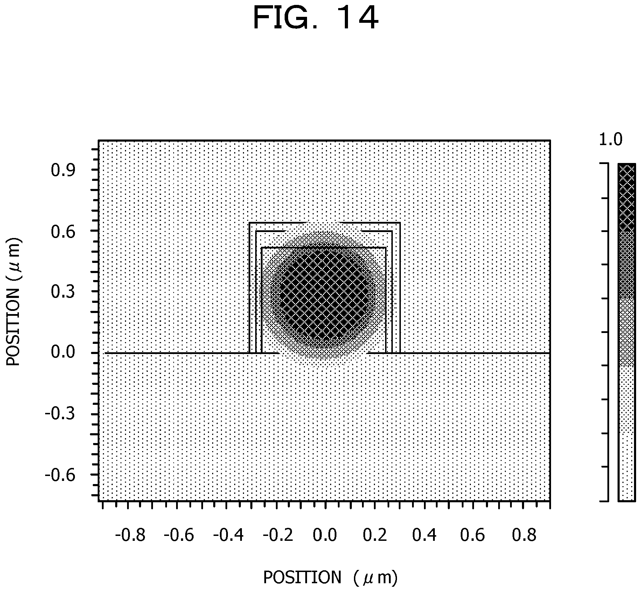

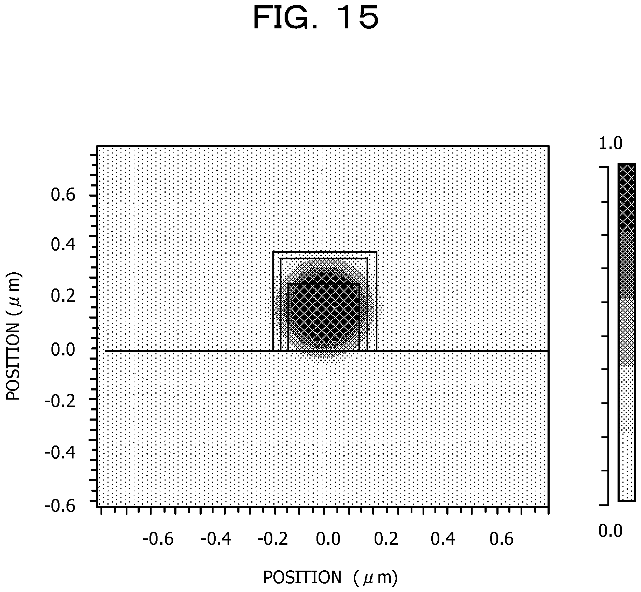

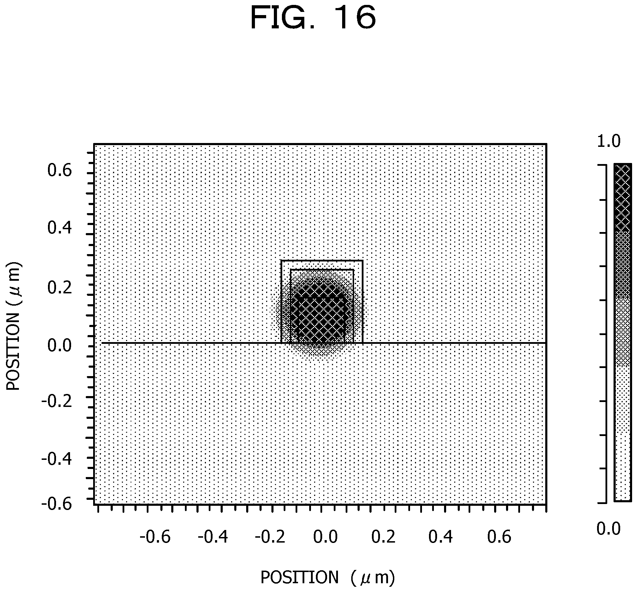

Next, the core diameter dependence of the propagation characteristics of the 0 order transverse mode in the optical waveguide 1 according to the first embodiment will be described. FIGS. 14 to 16 are diagrams illustrating the distribution of the intensity of propagating light in the 0 order transverse mode in a cross section perpendicular to the longitudinal direction of the diamond layer 10. FIG. 14 illustrates the distribution of the intensity of the propagating light when the cross-sectional shape of the diamond layer 10 has a side length of 500nm. FIG. 15 illustrates the distribution of the intensity of the propagating light when the cross-sectional shape of the diamond layer 10 has a side length of 250nm. FIG. 16 illustrates the distribution of the intensity of the propagating light when the cross-sectional shape of the diamond layer 10 has a side length of 150nm. The horizontal axis in FIGS. 14 to 16 indicates a position in a direction (width direction) parallel to the first surface 11 with the center of the diamond layer 10 as a reference, and the vertical axis indicates a position in a direction (thickness direction) perpendicular to the first surface 11 with the center of the diamond layer 10 as a reference. In this calculation, it is assumed that the light is a continuous wave having a Gaussian intensity distribution and a progressive wave having a wave number vector in a direction perpendicular to the cross section of the optical waveguide 1.

As illustrated in FIGS. 14 to 16, in any case, single-mode propagation in the diamond layer 10 functioning as a core is realized. However, when the length of one side is less than the 150nm, a leakage electromagnetic field (evanescent field) to a side of the support substrate 21 becomes remarkable, and there is a concern that a propagation loss occurs. Therefore, when the cross-sectional shape of the diamond layer 10 is a square, the length of one side is preferably equal to or greater than the 150nm, and in general, the short diameter is preferably equal to or greater than the 150nm.

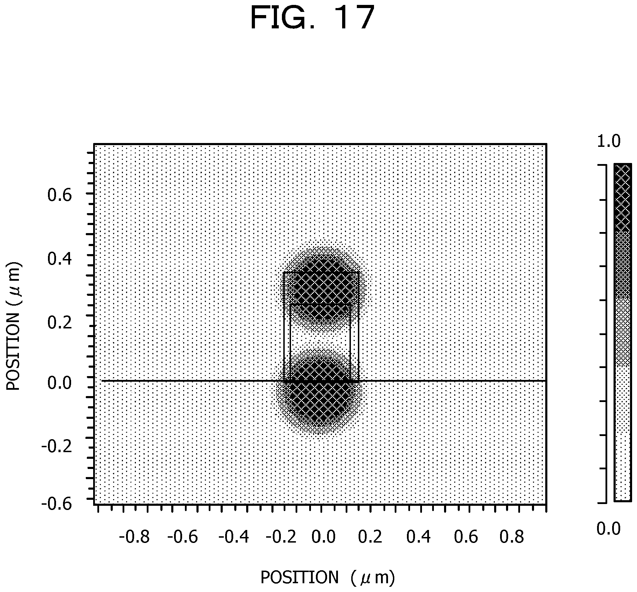

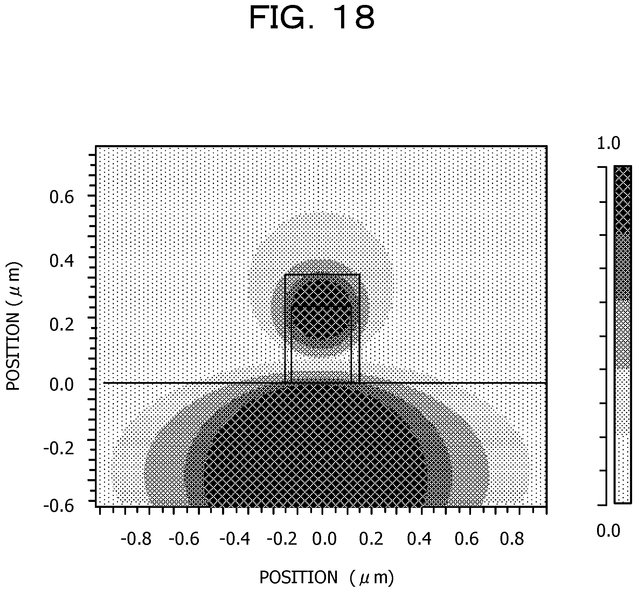

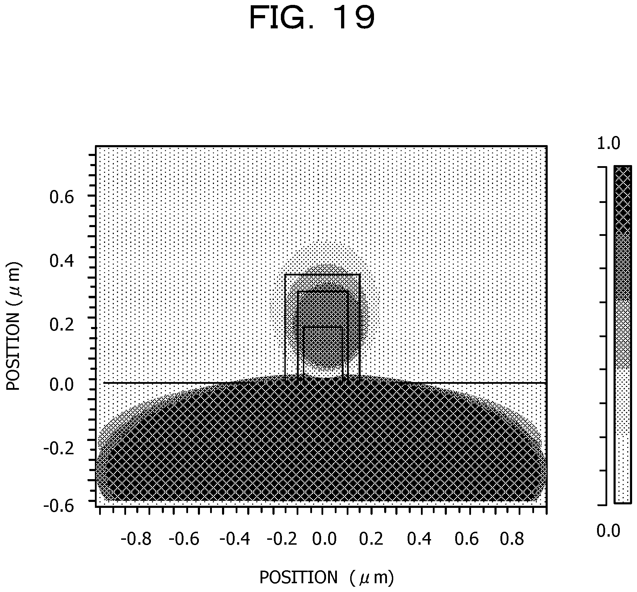

Next, the core diameter dependence of the propagation characteristics of the higher-order mode (first order mode) in the optical waveguide 1 according to the first embodiment will be described. FIGS. 17 to 19 are diagrams illustrating the distribution of the intensity of propagating light in the first order mode in a cross section perpendicular to the longitudinal direction of the diamond layer 10. FIG. 17 illustrates the distribution of the intensity of the propagating light when the cross-sectional shape of the diamond layer 10 has a side length of 250nm. FIG. 18 illustrates the distribution of the intensity of the propagating light when the cross-sectional shape of the diamond layer 10 has a side length of 200nm. FIG. 19 illustrates the distribution of the intensity of the propagating light when the cross-sectional shape of the diamond layer 10 has a side length of 150nm. The horizontal axis in FIGS. 17 to 19 indicates a position in a direction (width direction) parallel to the first surface 11 with the center of the diamond layer 10 as a reference, and the vertical axis indicates a position in a direction (thickness direction) perpendicular to the first surface 11 with the center of the diamond layer 10 as a reference. In this calculation, it is assumed that the light is a continuous wave having a Gaussian intensity distribution and a progressive wave having a wave number vector in a direction perpendicular to the cross section of the optical waveguide 1.

As illustrated in FIGS. 17 to 19, when the length of one side exceeds 250nm, there is a concern that the wave guide propagation by the high-order mode cannot be ignored. Therefore, when the cross-sectional shape of the diamond layer 10 is a square, the length of one side is preferably equal to or less than the 250nm, and in general, the short diameter is preferably equal to or less than the 250nm.

From the above, the short diameter in the cross section perpendicular to the longitudinal direction of the diamond layer 10 is preferably not less than 150nm and not more than 250nm, and more preferably not less than 170nm and not more than 230nm.

The metal layer 30 does not need to cover the entire upper surface of the clad layer 22. The metal layer 30 preferably overlaps at least the color center 13 in a plan view from a direction perpendicular to the second surface 12.

### (Second Embodiment)

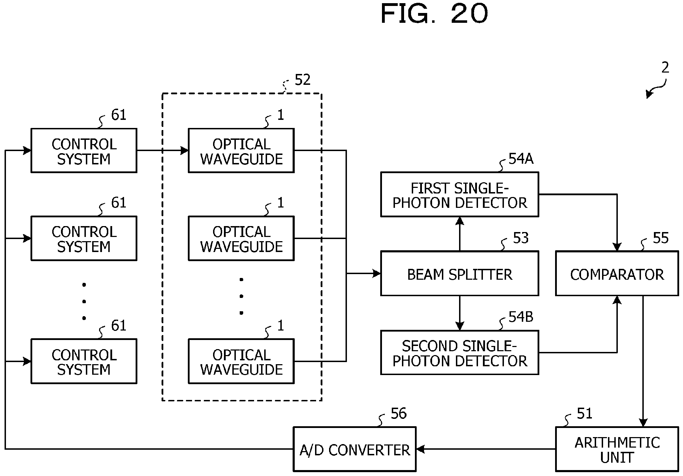

Next, a second embodiment will be described. The second embodiment relates to a quantum computing device including the optical waveguide 1 according to the first embodiment. FIG. 20 is a block diagram illustrating a quantum computing device according to the second embodiment.

As illustrated in FIG. 20, the quantum computing device 2 according to the second embodiment includes a plurality of optical waveguides 1. The quantumcomputing device 2 includes an arithmetic unit 51, a He-cryostat 52, a beam splitter 53, a first single-photon detector 54A, a second single-photon detector 54B, a comparator 55, and an analog-to-digital (A/D) converter 56. The quantum computing device 2 includes a plurality of control systems 61 and a plurality of optical waveguides 62.

The He cryostat 52 accommodates the plurality of optical waveguides 1 and cools temperatures of the plurality of optical waveguides 1 to an extremely low temperature. The control system 61 is provided for each single color center 13 constituting a quantum bit, and applies a magnetic field, an electric field, a microwave, a laser beam, or the like to the color center 13. For example, the magnetic field and the electric field are used for adjusting the intrinsic energy of the color center 13 (adjusting the frequency of the state readout photon), the microwave is used for controlling the quantum state of the color center 13, and the laser light is used for state readout (generating a single photon). The optical waveguide 62 is installed so that arbitrary two paths are oppositely incident on each optical waveguide 1 at the beam splitter 53. Each optical waveguide 62 is configured so that the optical path length from the color center 13 to the beam splitter 53 is substantially equal.

The beam splitter 53 splits the incident light and outputs it to the first single-photon detector 54A and the second single-photon detector 54B, respectively. The first single-photon detector 54A and the second single-photon detector 54B detect single-photons from the light output by the beam splitter 53. The comparator 55 compares the single-photon detection signal from the first single-photon detector 54A with the single-photon detection signal from the second single-photon detector 54B. For example, the comparator 55 specifies which of the first single-photon detector 54A and the second single-photon detector 54B has detected and an order of detection by the first single-photon detector 54A and the second single-photon detector 54B. The arithmetic unit 51 analyzes the output from the comparator 55. The A/D converter 56 converts an analog control signal output from the arithmetic unit 51 into a digital signal and outputs the digital signal to each control system 61.

The quantum computing device 2 includes the optical waveguide 1, and the color center 13 is used as a quantum bit. For this reason, the charged state of the color center 13 is stable even at an extremely low temperature, and it is possible to obtain excellent reliability of the analysis result.

Although preferred embodiments and the like have been described in detail above, the present disclosure is not limited to the above-described embodiments and the like, and various modifications and substitutions may be added to the above-described embodiments and the like without departing from the scope described in the claims.

### DESCRIPTION OF SYMBOLS

1 : optical waveguide
2 : quantum computing device
10 : diamond layer
13 : color center
21 : support substrate
22 : clad layer
30 : metal layer

## Claims

1. An optical waveguide including:
a diamond layer including a first surface, a second surface and a diamond layer including a complex defect;
a first clad layer in contact with the first surface;
a second clad layer in contact with the second surface and including a polarity; and
a metal layer in Schottky contact with the second clad layer.

2. The optical waveguide according to claim 1, wherein a refractive index of the first clad layer and a refractive index of the second clad layer are smaller than a refractive index of the diamond layer.

3. The optical waveguide according to claim 1 or claim 2, wherein the second clad layer has spontaneous polarization which is oriented from a side of the metal layer to a side of the diamond layer.

4. The optical waveguide according to any one of claims 1 to 3, wherein the metal layer overlaps at least the complex defect in a plan view.

5. The optical waveguide according to any one of claims 1 to 4, wherein the complex defect is composed of at least one of nitrogen, silicon, germanium, tin, lead and boron and a vacancy.

6. The optical waveguide according to any one of claims 1 to 5, wherein the second clad layer includes a nitride semiconductor.

7. The optical waveguides according to claim 6, wherein a band gap of the nitride semiconductor is not less than 3.4 eV and not more than 6.4 eV at a room temperature.

8. The optical waveguide according to any one of claims 1 to 7, wherein a short diameter in a cross section perpendicular to a longitudinal direction of the diamond layer is not less than 150 nm and not more than 250 nm.

9. The optical waveguide according to any one of claims 1 to 8, wherein the metal layer contains Au, Cu, or Ag, and a thickness of the metal layer is equal to or less than 10 nm.

10. The optical waveguide according to any one of claims 1 to 9, wherein the first clad layer includes a support substrate.

11. A quantum computing device comprising:
an optical waveguide including:
a diamond layer including a first surface, a second surface and a complex defect;
a first clad layer in contact with the first surface;
a second clad layer in contact with the second surface and including a polarity; and
a metal layer in Schottky contact with the second clad layer; and
a control system configured to apply a magnetic field, an electric field, a microwave or a laser beam to the optical waveguide.

12. A method of manufacturing an optical waveguide comprising:
forming a diamond layer including a first surface, a second surface and a diamond layer including a complex defect;
forming a first clad layer in contact with the first surface;
forming a second clad layer in contact with the second surface and including a polarity; and
forming a metal layer in Schottky contact with the second clad layer.

13. The method according to claim 12, wherein a refractive index of the first clad layer and a refractive index of the second clad layer are smaller than a refractive index of the diamond layer.

14. The method according to claim 12 or 13, wherein the second clad layer has spontaneous polarization which is oriented from a side of the metal layer to a side of the diamond layer.

15. The method according to any one of claims 12 to 14, wherein the metal layer overlaps at least the complex defect in a plan view.
